# EUROPEAN PATENT APPLICATION

(11) **EP 4 386 230 A1**
(43) Date of publication of application: **19.06.2024**
(21) Application number: 22213467.8
(22) Date of filing: 14.12.2022
(51) Int. Cl.: F16D 65/097

(54) **SPREADING DEVICE FOR ACTIVE CALIPER RELEASE**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 Munich (DE); HÖS, Levente, 1047 Budapest (HU); HOLLOSI, Mate, 1097 Budapest (HU); FRANCSIK, Mate Peter, 3176 Hollókö (HU); KLINGNER, Matthias, 82276 Adelshofen (DE); KOKREHEL, Csaba, 1119 Budapest (HU); KRÜGER, Sven Philipp, 81476 Munich (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KÜNEMUTH, Gregor, 80339 Munich (DE); FARAGO, Balazs, 6050 Lajosmizse (HU); KRETZ, Philipp, 80939 Munich (DE)

(57) **Abstract**

A spreading device (1) for brake pads (7), comprises:
a central wire (2) with at least one attachment portion (2a),
a first spring wire (3),
a second spring wire (4),
a first interface element (5), connecting the first spring wire (3) to the central wire (2),
a second interface element (6), connecting the second spring wire (4) to the central wire (2),
wherein the first spring wire (3) comprises:
a bent portion (3b),
two leg portions (3c1, 3c2), respectively connected to the bent portion (3b) at both sides,
and two connecting portions (3a1, 3a2), being connected to the respective leg portion (3c1, 3c2),
and wherein the second spring wire (4) comprises the same elements as the first spring wire (3)
wherein the bent portion (3b) of the first spring wire (3) is spaced from the bent portion (4b) of the second spring wire (3) on the central wire (2). In one embodiment, one leg portion (3c1) of the first spring wire (3) crosses one leg portion (4c1) of the second spring wire (4), and the other leg portion (3c2) of the first spring wire (3) crosses the other leg portion (4c2) of the second spring wire (4). In another embodiment, each leg portion (3c1, 3c2; 4c1, 4c2) comprises at least one bow section (3d1, 3d2; 4d1, 4d2) including a total bow of more than 90°.

By such designs, a more compact design, being in particular suitable for shorter brake pads for a separate parking brake caliper, can be enabled.

## Description

Brake systems, in particular brake systems with a disc brake, are inter alia used in commercial vehicles.

Regularly, two brake pads press against the brake disc (one from each side), and when a brake actuator is actuated, the brake pads are firmly pressed against the rotating brake disc, thereby causing a frictional force, whereby the braking process is performed.

To avoid a contact between the brake pads and the brake disc when the braking system is not actuated, the use of springs between the pads and the brake carrier is well-known from the state of the art.

For example, document DE 10 2016 124 310 A1 is known from prior art, wherein spring elements between the two brake pads are arranged over the disc to spread and return them (and the caliper) in a resting position after braking when the friction pairing is separated, because drag torque should be avoided.

In the state of the art, the active caliper release includes a central beam and two spring elements per side of the pad, i.e. in the outboard side and the inboard side.

The central beam is usually connected to the brake carrier in order to fix it, and hence acts as a fixation point statically placed over the center of the brake disc.

The falling-out of the central beam is usually prevented by a pad retainer bar, which also avoids that the pads can fall out of the brake caliper including their corresponding pad retainer springs. The spring elements of the active caliper release are mounted to the central beam and connect to fixation means, in particular holes, in the outboard and inboard pad backplates. This active caliper release tries to push back a caliper towards its original position after brake application, in order to avoid drag torque.

In some applications, it can be desirable to separate the brake functions around a disc brake by providing a separate parking brake caliper and a separate service brake caliper. The parking brake caliper is smaller in size and hence has to be equipped with shorter pads, compared to the separate service brake caliper. The caliper design as known in the state of the art is not feasible in this case, but the caliper and the pads can be smaller in size anyhow because the brake pads only have to transfer a comparatively low static parking brake torque, and not a higher dynamic service brake torque. Consequently no significant heat transfer capability is needed, and almost no wear volume is needed for the parking brake pads, as wear is less frequently occurring for parking brakes.

However, for the correct function of an active caliper release, two springs per brake pad are usually needed in order to allow an uniform axial resetting force acting on the pad backplate and hence also on the brake pad. However, the springs of the active caliper release need to have enough length in order to allow for sufficient displacement travel resulting from disc and pad wear (a small wear also occurs for parking brakes). However, the brake disc usually mainly wears down because of the service brake application by a separate service brake caliper acting on the disc, and the parking brake pads wear down because of degradation or aging effects. However, with a smaller caliper for separate parking brake, the fixation of the active caliper release to the corresponding interface of the backplates is more difficult, also due to necessary possibilities for pad exchange.

A technical problem of the present application can be seen in providing two spring elements for an active caliper release, thereby guaranteeing enough displacement travel, also for shorter sized brake pads which can be used in a separate parking brake caliper.

A side-aspect of the present application is to overcome the issue of complicated brake pad exchange procedure, by automatically aligning the wires / springs of the active caliper release with the pad backplate.

The technical problem of the present application is solved by a spreading device according to claim 1 and a disc brake according to claim 7. Further advantageous embodiments of the present application are subject-matter of the dependent claims. Furthermore, an advantageous use of a disc brake is subject-matter of claims 11 and 12. A spreading device for brake pads according to the first embodiment of the present invention comprises:
A central wire with at least one attachment portion,
a first spring wire,
a second spring wire,
a first interface element, connecting the first spring wire to the central wire,
a second interface element, connecting the second spring wire to the central wire,
wherein the first spring wire comprises:
a bent portion,
two leg portions respectively connected to the bent portion at both sides,
and two connecting portions, being connected to a respective leg portion,
and wherein the second spring wire comprises:
a bent portion,
two leg portions respectively connected to the bent portion at both sides,
and two connecting portions, being connected to the respective leg portion,
wherein the bent portion of the first spring wire is spaced from the bent portion of the second spring wire (on a central bar), and wherein one leg portion of the first spring wire crosses one leg portion of a second spring wire, and the other leg portion of the first spring wire crosses the other leg portion of the second spring wire.

In other words, one spring wire, in particular its leg portion, lays over the other one to allow a sufficient spring travel (along the central bar). As both spring wires cross each other, a more compact design, being in particular suitable for shorter brake pads for a separate parking brake caliper, can be enabled. In other words, both spring wires are telescoped partially into each other on the central wire.

In a second embodiment, a spreading device for brake pads comprises:
a central wire with at least one attachment portion,
a first spring wire,
a second spring wire,
a first interface element, connecting the first spring wire to the central wire,
a second interface element, connecting the second spring wire to the central wire,
wherein the first spring wire comprises:
a bent portion,
two leg portions, respectively connected to the bent portion at both sides,
and two connecting portions, being connected to the respective leg portion,
and wherein the second spring wire comprises:
a bent portion,
two leg portions, respective connected to the bent portion at both sides,
and two connecting portions, being connected to the respective leg portion,
wherein the bent portion of the first spring wire is spaced apart from the bent portion of the second spring wire (on the central bar), and
wherein each leg portion comprises at least one bow section, including a total bow of more than 90°.

The total bow is defined as the added bows of each bow section. Hence, the whole leg portion undergoes a total bow of more than 90°.

Also by this specific embodiment, as the leg portions are somehow folded, in particular by the bows, a very compact brake pad design for separate parking brake calipers is enabled, however also enabling enough displacement travel, in particular if wear occurs.

Preferably, the bent portion of the first spring wire and/or the bent portion of the second spring wire at least partially encircle the central wire. Hence, the spring wires are stably fixed to the central wire.

Preferably, the connection portions are wire ends adapted to be inserted into corresponding holes in the pad backplate.

This is a very easy possibility of connecting the spring wires to the pad backplates of the inboard and outboard brake pad, which is particularly useful for a simple pad exchange.

Preferably, the leg portions are elastically deformable, hence enabling an easy pushing back of the brake pads when they are not being actuated.

Preferably, the first interface element and the second interface element are slideable along the central bar. That means if a wear occurs and the displacement travel of the brake pads has to be adjusted, the interface elements can move along the central bar and hence move the position of the first spring wire and the second spring wire.

Preferably, the first interface element and the second interface element is rotatable around the central bar, providing an increased flexibility to the connection possibilities with the pad backplates.

For example, the first interface element and the second interface element can be sheet metal parts which are able to fix the first spring wire and the second spring wire to the central wire, so that they are attached to the central wire, but still are movable.

A disc brake according to the present invention comprises:
a brake disc,
two brake pads arranged at opposite sides of the brake disc (an inboard brake pad and an outboard brake pad),
respective pad backplates, adapted to hold the brake pads, a caliper,
a brake cylinder, a carrier, and
a spreading device according to the above-mentioned embodiments, wherein the at least one attachment portion of the central bar of the spreading device is connectable to the carrier, and the pad backplates are respectively provided with two connection elements, which are adapted to receive the connection portions of the first spring wire and the second spring wire.

Preferably, the connection elements are bores - with such a configuration, the connection between the first spring wire and the second spring wire to the backplates is very easy, also for installation purposes or when the pad has to be exchanged.

Preferably, the bores comprise at least one tapered portion at their entrances.

By such solution, an automatic alignment during the pad exchange can be enabled or at least made easier.

Preferably, a retainer bar is connected to the caliper, being adapted to fix the spreading device. As a side-aspect, also the brake pads can be fixed and prevented from falling out by the retainer bar.

Preferably, a wear adjuster is positioned in between the force flow coming from the brake cylinder and a plunger, which again presses against the pad backplate of the inboard brake pad.

More preferably, the spring rate of the first spring wire and the second spring wire is adapted to the working points of the wear adjuster.

By that specific function, a correct function of the wear adjuster can be achieved. If the first spring wire and the second spring wire exert too high push-back forces onto the caliper, the wear adjuster cannot work because its built-in safety clutches would always engage firstly and the wear adjusting would not happen.

Preferably the caliper comprises a recess portion for receiving the pad backplates and further recess extensions for accommodating connection portions of the spreading device. These help making the exchange of brake pads easier.

A preferably use of the disc brake according to the embodiments of the present invention is a use as a park brake.

Preferably, a park brake is used without a service brake included in the same caliper.

In other words, a separate caliper for a park brake is used.

In the following, preferable embodiments of the present application are described more in detail by the appended figures.
- Fig. 1: is an isometric view of a spreading device for brake pads, built in a caliper.
- Fig. 2: is a top view on a caliper with a spreading device for brake pads included.
- Fig. 3: is an isometric view of a spreading device per se.
- Fig. 4: is a top view on a spreading device, built in a caliper. Herein, the inboard brake pad is shown more in detail.
- Fig. 5: shows the arrangement of a brake cylinder and respective caliper, with a spreading element included.
- Fig. 6: shows two situations with a self-alignment of a spring wire within respective bores of a pad backplate, and the alignment mechanism per se.
- Fig. 7: shows spreading devices according to a second embodiment of the present invention, herein three different options are shown.

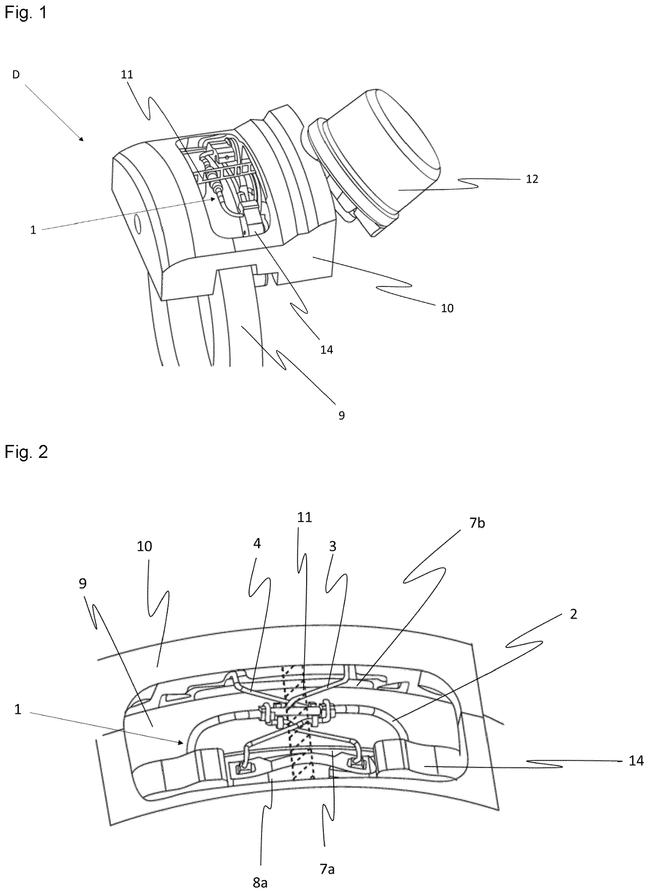

In Fig. 1, the arrangement of a spreading device 1 within a caliper 10 of a disk brake D is shown. The caliper 10 is arranged around a brake disc 9. Within the caliper 10, there is a brake carrier 14, and the spreading device 1 is connected to the brake carrier 14. Furthermore, a retainer bar 11 is provided in order to close the opening of the caliper 10, in order to fix the spreading device 1 and to prevent the falling out of the spreading device 1 and the brake pads 7a, 7b (not shown in this view). Furthermore, a park brake cylinder 12 is arranged next to the caliper 10.

Fig. 2 shows a more detailed view of the arrangement of the spreading device 1 within a caliper 10. The caliper 10 is arranged around the brake disc 9. The spreading device 1 comprises a central wire 2, being fixed to the brake carrier 14, and a first spring wire 3 and a second spring wire 4, which are arranged on the central wire 2. On one respective side, the first spring wire 3 and the second spring wire 4 are connected to a respective pad backplate 8a (of the inboard brake pad), the pad backplate 8a carrying a brake pad 7a. Furthermore, a retainer bar 11 is arranged on the caliper 10, in order to fix the spreading device 1. The connection to the outboard pad backplate is not show in detail in Fig. 2.

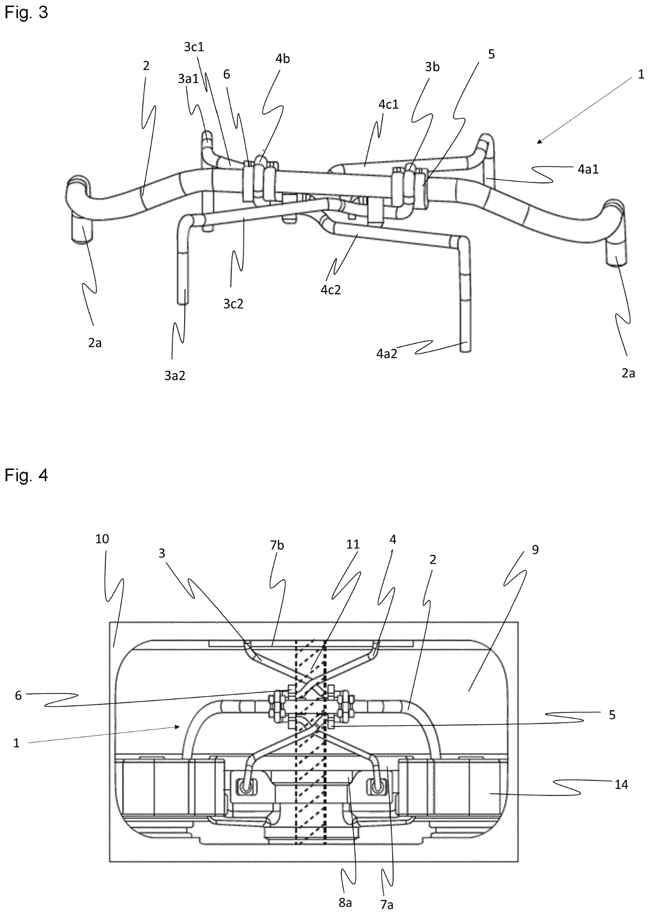

Fig. 3 shows a spreading device 1 per se.

Herein, the central wire 2 is provided, comprising two attachment portions 2a, which are extensions of the central wire 2 and which are adapted to be pushed into a hole, for example in a brake carrier 14 (not shown in this figure).

On the central wire 2, a respective first interface element 5 is provided, holding a respective bent portion 3b of the first spring wire 3. Two respective leg portions 3c1, 3c2 are connected to the bent portion 3b, and at the other end of each leg portion 3c1, 3c2, a respective connection portion 3a1, 3a2 is respectively arranged. Said connecting portions 3a1, 3a2 can be pushed in respective pad backplates 8a, 8b (not shown here). The bent portion 3b partially encircles the central wire 2.

Symmetrically, a second interface element 6 is provided, holding a respective bent portion 4b of the second spring wire 4. Again, two leg portions 4c1, 4c2 extend (herein, in the right direction), wherein respective connecting portions 4a1, 4a2 are connected to respective leg portions 4c1, 4c2. It is obvious that the leg portion 3c2 of the first spring wire 3 and the leg portion 4c2 of the second spring wire 4 cross each other - also the leg portions 4c1 and 3c1 cross each other (not visible here).

By such an arrangement, a very compact design can be guaranteed, as the first interface element 5 and the second interface element 6 are spaced apart from each other, holding respective bent portions 3b and 4b. However, the first spring wire 3 and the second spring wire 4 can be moved along a central bar (2) with the respective interface elements 5 and 6.

Fig. 4 shows such spreading device 1 built in a caliper 10. The first interface element 5 holds the first spring wire 3, whereas the second interface element 6 holds the second spring wire 4. The two respective ends of the spring wire 3 (the connecting portion 3a1, 3a2 - not shown in detail in this figure) are respectively connected to opposing pad backplates 8a and 8b - the same being true for the second spring wire 4 (the connecting portions 4a1, 4a2 - also not shown in detail here). The central wire 2 again is fixed to the brake carrier 14. For the outboard pad, only the pad 7b can be seen, but not a respective pad backplate 8b (not shown in this presentation). The caliper 10 is arranged around the brake disc 9.

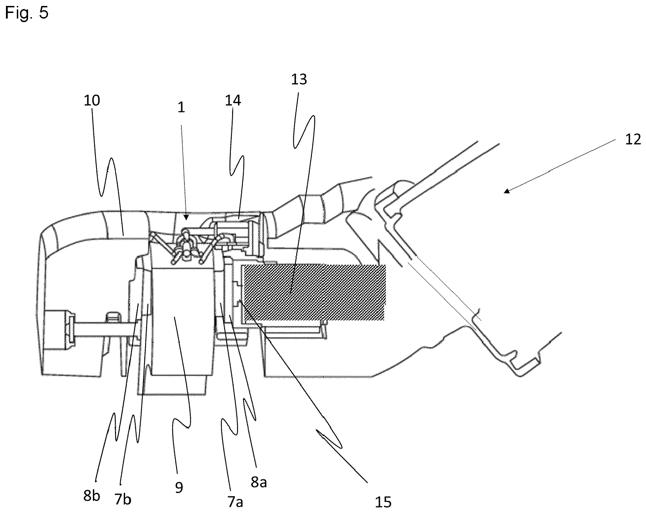

Fig. 5 shows an arrangement of a brake caliper 10, enclosing a respective brake disc 9. The arrangement of the spreading device 1 can be seen, the spreading device 1 being fixed to the brake carrier 14. The inboard brake pad 7a with the respective pad backplate 8a is arranged on the one side of the brake disc 9, and on the other side, the outboard brake pad 7b and the respective pad backplate 8b are shown. Also, the park brake cylinder 12 is shown, being mounted next to the caliper 10. Additionally, a wear adjuster 13 is arranged, details of which, however, are not presented in Fig. 5. Within the caliper 10, a wear adjuster 13 is positioned in between the force flow coming from the brake cylinder 12 and a plunger 15. The plunger 15 pushes onto the inboard pad backplate 8a.

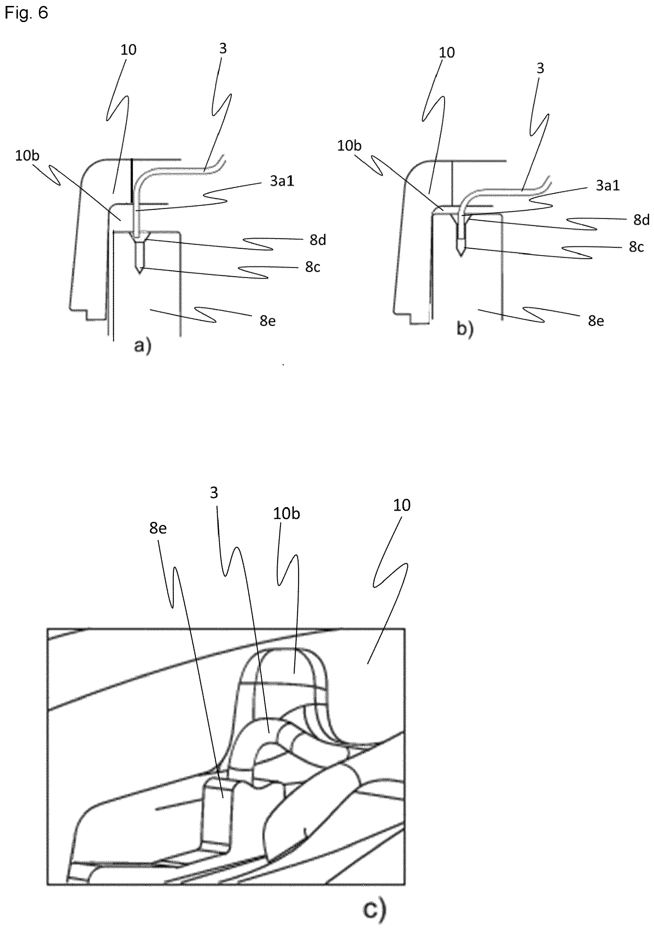

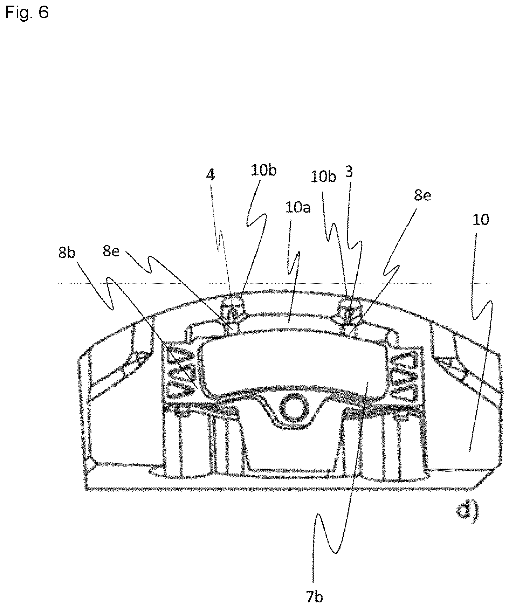

Fig. 6 a) and b) show the respective fixation of a first spring wire 3 with a connecting portion 3a1, which fits into a bore 8c in an extension portion 8e of a pad backplate 8a (not shown completely in this figures), the bore 8c including a tapered portion 8d. Before the pad backplate 8a is pushed in, the first spring wire 3 is pretensioned and pushes against the recess extension 10b in the caliper 10. When then the pad backplate 8a is pushed upwards (for pad exchange), the first spring wire 3 gets even more prestressed by the tapered portion 8d and therefore pushes back the pad backplate 8a.

In Fig. 6 b) it is shown that if the extension portion 8e is pushed upwards, the first spring wire 3 is at first prestressed, but then easily slides into and within the bore 8c because of the tapered portion 8d.

In Fig. 6 c, the extension portion 8e of a pad backplate 8a (not shown completely in this figure) is shown, and it is also shown that within the caliper 10, a recess extension 10b is provided, wherein a part of the first spring wire 3 can be provided.

Fig. 6d shows an outboard pad backplate 8b with a respective pad 7b mounted onto it, where there is the big recessed portion 10a including two smaller recess extensions 10b arranged in the caliper 10, and one end of the first spring portion 3 and the second spring portion 4 (details not shown) are arranged within one respective recess extension 10b together with the extension portions 8e of the pad backplate 8b.

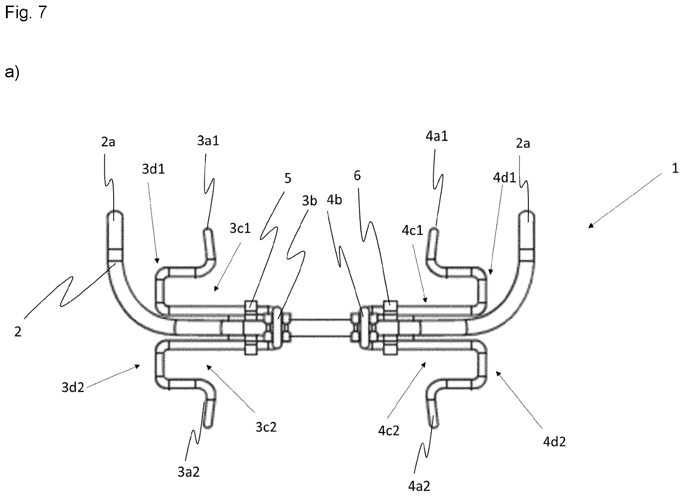

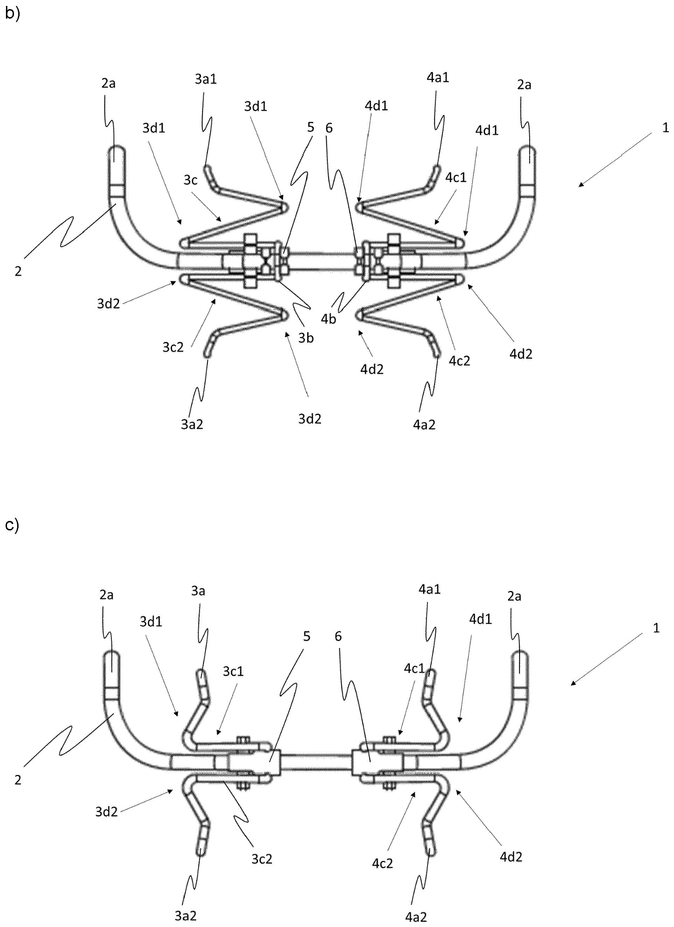

Fig. 7 shows respective spreading devices 1 according to a second embodiment of the present invention.

In Fig. 7 a, the spreading device 1 again comprises the central wire 2 with two attachment portions 2a at each side. Again, there is a first interface element 5, holding the first spring wire 3. The first spring wire 3 comprises again a bent portion 3b, two leg portions 3c1, 3c2 extending from the bent portion 3b. The leg portions 3c1, 3c2 enclose one respective bow section 3d1, 3d2, wherein a turn of 180° is performed. That means, the leg portions 3c1, 3c2 change their direction once completely. Again, two connecting portions 3a1, 3a2 are provided on each leg portion 3c1, 3c2. The second spring wire 5 is built symmetrically, also including one second interface element 6.

Also such design allows sufficient travel, but also a very compact design being suitable for very small pads, used for park brake pads.

Fig. 7b shows a similar embodiment, however, herein there are two bow sections 3d1, 3d2 in each leg portion 3c1, 3c2 of the first spring wire. The second spring wire 4 is built symmetrically. Herein, two bows of over 90° are included, which also allow a very compact design and sufficient way for travelling of the spring wires 3 and 4, if they have to be adjusted because of wear.

Fig. 7c shows a further option for the second embodiment, which is very similar to the first option, wherein the bow sections 3d1, 3d2, 4d1 and 4d2 have a total bow of more than 90°.

The present invention is not limited to the above-mentioned embodiments.

The first and second interface element could be also included within the first spring wire and the second spring wire, for example by certain windings of the wire around the central wire.

Furthermore, the retainer bar can adopt every geometrical configuration.

The first spring wire 3 and second spring wire 4 could also work without a central wire 2. A respective fixation to the carrier might be separately provided.

### LIST OF REFERENCE SIGNS

- 1: Spreading device
- 2: Central wire
- 2a: Attachment portion
- 3: First spring wire
- 3a1, 3a2: Connecting portion
- 3b: Bent portion
- 3c1, 3c2: Leg portion
- 3d1, 3d2: Bow section
- 4: Second spring wire
- 4a1, 4a2: Connecting portion
- 4b: Bent portion
- 4c1, 4c2: Leg portion
- 4d1, 4d2: Bow section
- 5: First interface element
- 6: Second interface element
- 7a: Brake pad (inboard)
- 7b: Brake pad (outboard)
- 8a: Pad backplate (inboard)
- 8b: Pad backplate (outboard)
- 8c: Connection element / bore
- 8d: Tapered portion
- 8e: Extension portion
- 9: Brake disc
- 10: Caliper
- 10a: Recessed portion
- 10b: Recess extension
- 11: Retainer bar
- 12: Park Brake cylinder
- 13: Wear adjuster
- 14: Brake carrier
- 15: Plunger
- D: Disc brake

## Claims

1. Spreading device (1) for brake pads (7), comprising:
a central wire (2) with at least one attachment portion (2a),
a first spring wire (3),
a second spring wire (4),
a first interface element (5), connecting the first spring wire (3) to the central wire (2),
a second interface element (6), connecting the second spring wire (4) to the central wire (2),
wherein the first spring wire (3) comprises:
a bent portion (3b),
two leg portions (3c1, 3c2), respectively connected to the bent portion (3b) at both sides,
and two connecting portions (3a1, 3a2), being connected to the respective leg portion (3c1, 3c2),
and wherein the second spring wire (4) comprises:
a bent portion (4b),
two leg portions (4c1, 4c2), respectively connected to the bent portion (4b) at both sides,
and two connecting portions (4a1, 4a2), being connected to the respective leg portion (4c1, 4c2),
wherein the bent portion (3b) of the first spring wire (3) is spaced apart from the bent portion (4b) of the second spring wire (3) on the central wire (2), and
wherein one leg portion (3c1) of the first spring wire (3) crosses one leg portion (4c1) of the second spring wire (4), and the other leg portion (3c2) of the first spring wire (3) crosses the other leg portion (4c2) of the second spring wire (4).

2. Spreading device (1) for brake pads (7), comprising:
a central wire (2) with at least one attachment portion (2a),
a first spring wire (3),
a second spring wire (4),
a first interface element (5), connecting the first spring wire (3) to the central wire (2),
a second interface element (6), connecting the second spring wire (4) to the central wire (2),
wherein the first spring wire (3) comprises:
a bent portion (3b),
two leg portions (3c1, 3c2), respectively connected to the bent portion (3b) at both sides,
and two connecting portions (3a1, 3a2), being connected to the respective leg portion (3c1, 3c2),
and wherein the second spring wire (4) comprises:
a bent portion (4b),
two leg portions (4c1, 4c2), respectively connected to the bent portion (4b) at both sides,
and two connecting portions (4a1, 4a2), being connected to the respective leg portion (4c1, 4c2),
wherein the bent portion (3b) of the first spring wire (3) is spaced apart from the bent portion (4b) of the second spring wire (3) on the central wire (2), and
each leg portion (3c1, 3c2; 4c1, 4c2) comprises at least one bow section (3d1, 3d2; 4d1, 4d2) including a total bow of more than 90°.

3. Spreading device (1) according to claim 1 or 2, wherein the bent portion (3b) of the first spring wire (3) and/or the bent portion (4b) of the second spring wire (4) at least partially encircle the central wire (2).

4. Spreading device (1) according to one of claims 1 to 3, wherein the connection portions (3a1, 3a1; 4a1, 4a2) are wire ends adapted to be inserted into corresponding holes (8c) in a pad backplate (8a, 8b).

5. Spreading device (1) according to one of claims 1 to 4, wherein the leg portions (3c1, 3c2; 4c1, 4c2) are elastically deformable.

6. Spreading device (1) according to one of claims 1 to 5, wherein the first interface element (5) and the second interface element (6) are slideable along the central wire (2).

7. Spreading device (1) according to one of claims 1 to 6, wherein the first interface element (5) and the second interface element (6) is rotatable around the central wire (2).

8. Disk brake (D), comprising:
a brake disc (9),
two brake pads (7a, 7b), arranged at opposite sides of the brake disc (9),
respective pad backplates (8a, 8b), adapted to hold the brake pads (7a, 7b),
a caliper (10),
a brake cylinder (12),
a carrier (14), and
a spreading device (1) according to one of claims 1 to 6,
wherein the at least one attachment portion (2a) of the central wire (2) of the spreading device (1) is connectable to the carrier (14),
and the pad backplates (8a, 8b) are respectively provided with two connection elements (8c), which are adapted to receive the connection portions (3a1, 3a2, 4a1, 4a2) of the first spring wire (3) and the second spring wire (4).

9. Disc brake (D) according to claim 8, wherein the connection elements (8c) are bores.

10. Disc brake (D) according to claim 9, wherein the bores (8c) comprise at least one tapered portion (8d) at their entrances.

11. Disc brake (D) according to one of claims 8 to 10, wherein a retainer bar (11) is connected to the caliper (10), being adapted to fix the spreading device (1).

12. Disc brake (D) according to one of claims 8 to 11, wherein a wear adjuster (13) is in between the force flow coming from the brake cylinder (12) and a plunger (15) acting against the pad backplate (8a).

13. Disc brake (D) according to claim 12, wherein the spring rate of the first spring wire (3) and the second spring wire (4) is adapted to the working points of the wear adjuster (13).

14. Disc brake (D) according to one of claims 1 to 13, wherein the caliper (10) comprises a recess portion (10a) for receiving the pad backplates (8a, 8b) and further recess extensions (10b) for accommodating connection portions (3a1, 3a1; 4a1, 4a2) of the spreading device (1).

15. Use of a disk brake (D) according to one of claims 8 to 14 as a park brake.

16. Use of a disk brake (D) according to one of claims 8 to 14 as a park brake without a service brake included in the same caliper (12).
